# FASCICULE DE BREVET EUROPEEN

(11) **EP 1 681 853 B1**
(45) Date de publication et mention de la délivrance du brevet: **28.11.2007**
(21) Numéro de dépôt: 06100233.3
(22) Date de dépôt: 11.01.2006
(51) Int. Cl.: H04N 5/225, H04N 5/33

(54) **Dispositif de vision de jour et de nuit**
Tag- und Nachtsichtgerät
Day and night vision device

(30) Priorité: 14.01.2005 FR 0500397
(43) Date de publication de la demande: 19.07.2006
(73) Titulaire: Sagem Défense Sécurité, 75015 Paris (FR)
(72) Inventeur: Deltel, Geoffroy, 92160 ANTONY (FR); Patry, Philippe, 92260 FONTENAY AUX ROSES (FR); Guettier, Denis, 77410 CHARLY (FR); Faure, Sylvain, 75014 PARIS (FR)
(74) Mandataire: Callon de Lamarck, Jean-Robert

(56) Documents cités:
- EP-A- 1 014 419
- EP-A- 1 306 906
- WO-A-95/06388
- US-A- 4 695 718
- US-A- 5 070 407
- US-A- 6 069 352
- US-A- 6 111 692
- US-B1- 6 307 586

## Description

### DOMAINE TECHNIQUE GENERAL

La présente invention concerne les dispositifs de vision de jour et de nuit.

Plus précisément, elle concerne un dispositif optronique de vision de jour et de nuit, notamment portable.

### ETAT DE L'ART

Des dispositifs optroniques de vision de jour et de nuit sont utilisés dans différents dispositifs portables d'observation d'un environnement. Les dispositifs d'observation sont par exemple installés dans des jumelles, et/ou des viseurs d'armes ou des casques de fantassins.

On comprend que les dispositifs d'observation portables sont très préférentiellement de petites dimensions et légers.

Les dispositifs optroniques d'observation connus comportent en général une voie jour et une voie nuit intégrées.

Un exemple d'un tel dispositif peut alors comporter deux voies distinctes. Dans le cas d'un dispositif vidéo, il peut ainsi comporter deux voies optiques et deux capteurs distincts.

Préférentiellement, la voie jour comporte une matrice connue de détection du type à couplage de charges CCD (Charge-Coupled Device) ou une matrice connue de détection du type semi-conducteur à oxyde de métal complémentaire CMOS (Complementary Metal-Oxide Semiconductor).

Généralement, la voie nuit comporte soit un dispositif à intensification de lumière couplé à une matrice à couplage de charges ou ICCD (Intensified Charge-Coupled Device), soit un dispositif à intensification de lumière couplé à une matrice semi-conducteur à oxyde de métal complémentaire ou ICMOS (Intensified Complementary Metal-Oxide Semiconductor), soit préférentiellement un capteur connu à bombardement électronique sur une matrice CMOS ou EBCMOS (Electron Bombarded Complementary Metal-Oxide Semiconductor), soit un capteur connu à bombardement électronique sur une matrice CCD ou EBCCD (Electron Bombarded Charge-Coupled Device)

Dans des dispositifs de vision de nuit du type IL (à intensification de lumière), une photocathode effectue d'abord une conversion des photons incidents en provenance de la scène en électrons. Les électrons sont ensuite multipliés dans une galette amplificatrice constituée de microcanaux avant de frapper une plaque de phosphore qui effectue à son tour une conversion des électrons en photons émis. Les photons émis sont envoyés via une matrice (ou « taper » en anglais) de fibres optiques sur un capteur CCD ou CMOS qui permet ensuite d'obtenir une image vidéo.

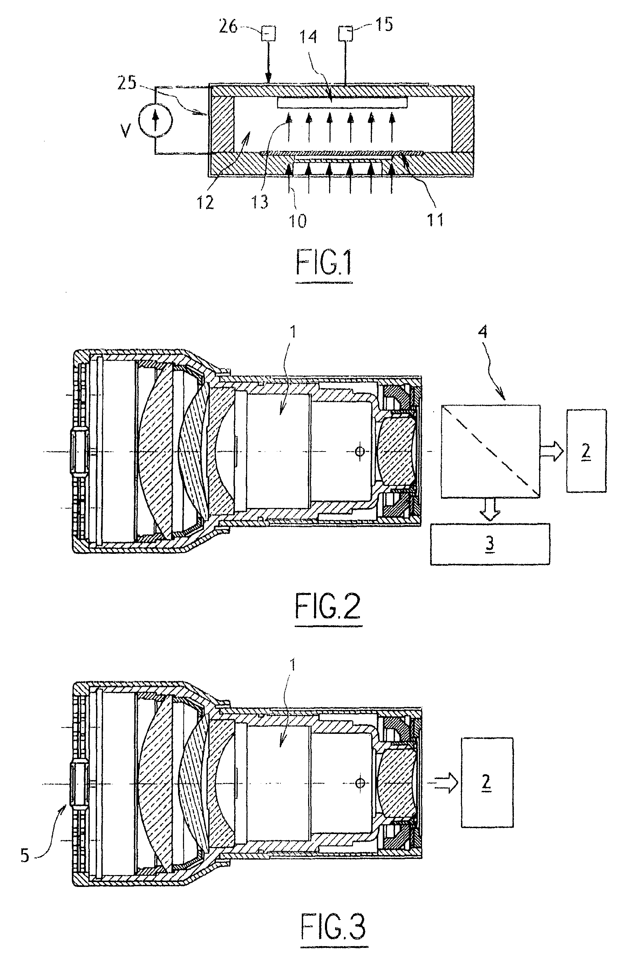

La figure 1 montre que dans des dispositifs de vision de nuit utilisant la technologie EBCMOS ou EBCCD, un objectif focalise les photons 10 incidents en provenance de la scène sur une photocathode 11 située dans un boîtier hermétique 25. De même que pour les dispositifs du type tube IL, la photocathode 11 est par exemple en un matériau à base AsGa (arséniure de gallium) ou multi-alcali, La photocathode convertit les photons en électrons 13. Ces derniers sont accélérés dans une chambre 12 où règne le vide et où une différence de potentiel d'une valeur absolue V de plusieurs milliers de volts est appliquée. Les électrons accélérés 13 viennent « bombarder » une matrice 14 CMOS ou CCD qui permet ensuite d'obtenir une image vidéo grâce à des moyens 15 en sortie de la matrice 14. Des moyens 26 permettent d'envoyer au boîtier 25 des signaux de contrôle et de polarisation.

Les technologies EBCMOS ou EBCCD ont notamment l'avantage de permettre la conception de dispositifs de vision nocturne moins onéreux, moins lourds, moins encombrants et consommant moins que ceux utilisant la technologie des tubes IL, notamment du fait de l'absence de galette amplificatrice à microcanaux et de plaque de phosphore. En outre, l'absence de cette galette de microcanaux minimise la désorption des gaz facilitant la tenue du vide de haute qualité nécessaire à l'intérieur du boîtier pour garantir un faible bruit et une longue durée de vie de la photocathode.

Un dispositif d'observation jour/nuit peut également comporter deux voies semi distinctes.

La figure 2 montre que dans ce cas, le dispositif comporte une voie optique 1 commune à deux capteurs 2 et 3 via un séparateur 4 de faisceaux. Le capteur 2 de jour est par exemple une matrice CCD ou une matrice CMOS. Le capteur de nuit 3 est par exemple un dispositif ICCD, un dispositif ICMOS ou préférentiellement un capteur EBCMOS ou EBCCD.

Les dispositifs précédents présentent cependant des inconvénients.

De tels dispositifs d'observation permettent une observation jour/nuit, mais ils requièrent beaucoup d'éléments optiques et deux capteurs. Le montage de tels éléments et capteurs se fait au détriment de la compacité et de la légèreté du dispositif d'observation. Ils sont donc encombrants et relativement lourds, du fait de la présence des deux voies distinctes ou semi distinctes.

Pour résoudre ces problèmes, il est possible de ne prévoir qu'une seule voie dans le dispositif d'observation.

La figure 3 montre que les dispositifs IL actuels peuvent être utilisés de jour, moyennant le positionnement d'un élément escamotable 5 entre l'environnement et l'entrée de l'objectif de la voie optique 1. L'élément 5 est un diaphragme et/ou une densité optique placés sur l'objectif. Lors d'une vision nocturne, l'élément 5 est escamoté. Lors d'une vision de jour, l'élément est placé sur l'objectif pour permettre d'utiliser le dispositif et notamment le capteur 2 sans risque de suréclairement de la photocathode.

Opérationnellement, l'usage d'un tel dispositif d'observation présente peu d'intérêt, dans la mesure où la qualité d'image est limitée par le tube IL et ses rendements de conversions. L'utilisation d'un dispositif IL en mode jour ne vaut pas celle d'une voie jour classique (CMOS ou CCD).

Les dispositifs d'observation de l'état de l'art ne permettent pas l'utilisation de la technologie EBCMOS ou EBCCD dans une vision de jour dans un dispositif d'observation comportant une seule voie optique, notamment du fait de la dégradation de la photocathode aux forts éclairements diurnes et un besoin de refocalisation entre le faisceau de jour et le faisceau de nuit.

US-A-5 070 407 divulgue une caméra comportant un mécanisme de changement de filtres optiques.

EP-A-1 306 906 divulgue une technique de détection d'image à faible intensité, utilisant le bombardement électronique d'une matrice de détection.

US-A-6 307 586 divulgue une caméra disposant d'un mode de vision jour et d'un mode de vision nuit, et comportant un détecteur comprenant une photocathode, une matrice de détection et un élément non escamotable permettant de passer du mode de vision jour au mode de vision nuit par son déplacement.

### PRESENTATION DE L'INVENTION

L'invention propose de pallier au moins un de ces inconvénients.

A cet effet, l'invention propose un dispositif optronique d'observation comportant un détecteur, le détecteur comportant une photocathode et un capteur agencés pour recevoir un faisceau lumineux incident, le dispositif comportant en outre des moyens de commutation aptes à placer un élément optique au droit dudit détecteur sur le trajet du faisceau incident ou à escamoter ledit élément, le dispositif comportant des moyens aptes à focaliser un rayon incident sur la photocathode lorsque l'élément est en position escamotée, caractérisé en ce que l'élément est apte, lorsqu'il est placé au droit du détecteur, à focaliser le faisceau sur le capteur et à filtrer spectralement le faisceau pour bloquer tout ou partie des longueurs d'onde pour lesquelles la responsivité de la photocathode est supérieure à un seuil donné.

L'invention est avantageusement complétée par les caractéristiques suivantes, prises seules ou en une quelconque de leur combinaison techniquement possible :
- le seuil de responsivité pour lequel l'élément est apte à filtrer les longueurs d'onde correspond à un seuil de non-dégradation thermique de la photocathode. Il définit une zone spectrale pour laquelle la photocathode n'interagit plus ou très peu avec les photons incidents et pour laquelle la responsivité du capteur est suffisante pour fournir un signal vidéo de bonne qualité ;
- la photocathode est placée en amont du capteur sur le trajet du faisceau et comporte de l'arséniure de gallium (AsGa) ou du silicium avec un dépôt multi alcali.
- le capteur est du type semi-conducteur à oxyde de métal complémentaire ou à couplage de charges ;
- les moyens de commutation sont en outre aptes à placer une lame optique d'équilibrage au droit du détecteur sur le trajet du faisceau incident lorsque l'élément optique est en position escamotée ou à escamoter ladite lame d'équilibrage lorsque l'élément est au droit du détecteur ;
- la lame d'équilibrage est apte à filtrer spectralement le faisceau pour bloquer certaines longueurs d'onde ;
- la lame comporte au moins deux zones de filtrage de longueur d'ondes, les moyens de commutation étant aptes à placer chaque zone au droit du détecteur en fonction de l'utilisation du dispositif ;
- l'élément est apte à fermer l'ouverture optique de la pupille du détecteur ;
- le détecteur est du type EBCMOS ou EBCCD, la face de détection du capteur CMOS ou CCD étant la face arrière ;
- le dispositif de vision de jour et de nuit est adapté notamment pour être mis en place sur un casque de fantassin ou une arme.

Le dispositif d'observation de l'invention présente de nombreux avantages.

Tout d'abord, il est compact et léger. Il ne comporte qu'une voie optique commune pour les visions de jour et de nuit. Il permet d'assurer la vision de jour et de nuit à l'aide d'un seul et même capteur.

Il permet notamment l'utilisation de la technologie EBCMOS ou EBCCD en vision de nuit, et permet un basculement de la technologie EBCMOS ou EBCCD de nuit à une technologie CMOS ou CCD de jour sans avoir à refocaliser le rayon incident.

Il permet en outre de protéger la photocathode en utilisation jour sans l'utilisation d'un diaphragme ou d'une densité optique.

L'invention remplit les mêmes fonctions que les dispositifs de l'art antérieur tout en y associant une bonne qualité d'image, notamment grâce à la bonne résolution du CMOS par exemple et n'est pas onéreuse, du fait de l'absence de tube IL.

L'invention est très simple de fabrication car elle ne comporte qu'une seule optique, un seul capteur et un filtre mobile protégeant également la photocathode. L'invention est en outre très simple d'utilisation.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement un détecteur connu du type EBCMOS ou EBCCD ;
- les figures 2 et 3, déjà commentées, représentent des dispositifs de vision jour/nuit comportant des voies distinctes ou semi distinctes ;
- la figure 4 représente les courbes de responsivité normalisée de la photocathode AsGa (traits pointillés) et du capteur (traits pleins) en fonction de la longueur d'onde d'un faisceau lumineux incident ;
- les figures 5A et 5B représentent un premier mode de réalisation possible d'un dispositif optronique d'observation selon l'invention, en position nuit et position jour respectivement ; et
- les figures 6A et 6B représentent un deuxième mode de réalisation possible d'un dispositif optronique d'observation selon l'invention, en position nuit et position jour respectivement.

Sur toutes les figures, les éléments similaires portent une référence numérique identique.

### DESCRIPTION DETAILLEE

L'invention comporte principalement un dispositif optique destiné à équiper par exemple une lunette pour un casque de fantassin ou une arme.

Le dispositif permet avantageusement une vision jour et une vision nuit.

A cet effet, la figure 5A montre qu'un dispositif optronique d'observation selon l'invention en position d'observation de nuit comporte un détecteur 2 comportant une photocathode 11 et un capteur 14 optique. La photocathode 11 est placée en amont du capteur 14 sur le trajet d'un faisceau 24 lumineux provenant de la scène à observer. Le faisceau lumineux incident 24 est focalisé grâce à un objectif 23 sur la photocathode 11 du détecteur en position nuit.

A cet effet, la photocathode 11 effectue une conversion des photons du faisceau 24 afin de les convertir en électrons aptes à être détectés par le capteur 14. Les électrons traversent une chambre 12 entre la photocathode 11 et le capteur 14 et viennent frapper le capteur 14 pour donner une image de nuit grâce à un traitement par des moyens 15 en sortie du capteur 14. Préférentiellement, la chambre 12 est une chambre à vide dans laquelle règne une différence de potentiel de l'ordre de 2000 volts, afin d'accélérer convenablement les électrons produits par la photocathode 11.

Le détecteur 14 peut être du type matrice à couplage de charges CCD ou préférentiellement une matrice du type semi-conducteur à oxyde de métal complémentaire CMOS. Préférentiellement, la face de détection du capteur 14 CMOS ou CCD est la face arrière. Une détection sur la face arrière permet d'améliorer le rendement de détection du capteur et évite des problèmes de facteur de remplissage sur la face avant du capteur.

On comprend que le détecteur 2 est du type EBCCD ou préférentiellement du type EBCMOS. La photocathode 11 peut être de génération 2 et comporter du silicium et un dépôt multi alcali, ou préférentiellement de génération 3 et comporter de l'arséniure de gallium (AsGa).

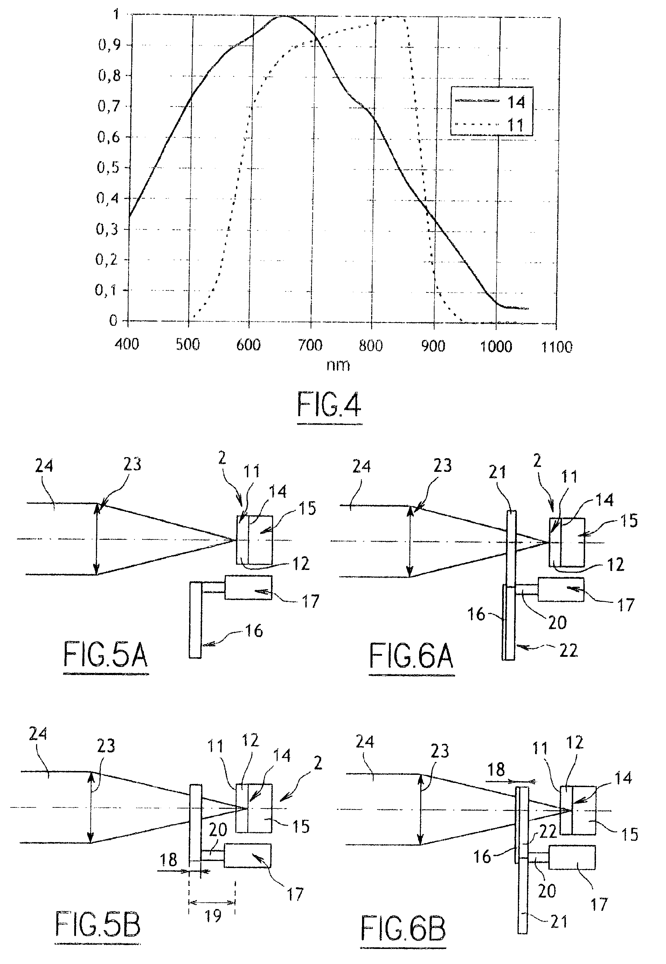

La figure 5B représente le dispositif de la figure 5A, mais cette fois en position de vision jour.

On remarque sur la figure 5B que le dispositif comporte des moyens 17 de commutation aptes à placer un élément optique 16 au droit du détecteur 2 sur le trajet du faisceau 24 incident. L'élément 16 est apte dans cette position à focaliser le faisceau incident 24 sur le capteur 14 et non plus sur la photocathode 11. L'élément 16 est de plus apte à filtrer spectralement le faisceau 24 pour bloquer les longueurs d'onde pour lesquelles la responsivité de la photocathode est supérieure à un seuil donné.

La figure 4 représente en effet un exemple de courbes de responsivité normalisée de la photocathode 11 (en traits pointillés) dans le cas d'une photocathode en AsGa et du capteur 14 (en traits pleins) en fonction de la longueur d'onde du faisceau incident. Bien entendu, la courbe en traits pointillés peut éventuellement changer pour différentes photocathodes suivant le dopage.

On constate que pour les longueurs d'onde inférieures à 500 nanomètres, ou supérieures à 950 nanomètres, la photocathode 11 est transparente au faisceau incident car sa responsivité est quasi nulle. Par contre, pour les longueurs d'ondes sensiblement comprises entre 600 nanomètres et 850 nanomètres (soit une partie du domaine visible et le proche infrarouge), la responsivité de la photocathode est optimale. Si une photocathode est utilisée dans ce domaine de responsivité optimale, avec des intensités d'éclairement correspondant aux intensités diurnes, elle risque d'être détruite ou sérieusement endommagée (destruction thermique et usure prématurée).

Par conséquent, si l'on dispose devant la photocathode 11 un élément optique 16 qui filtre spectralement le faisceau pour bloquer les longueurs d'onde pour lesquelles la responsivité de la photocathode est supérieure à un seuil donné, on protège la photocathode des dommages d'un éclairement trop intense.

Le seuil préférentiel est inférieur ou égal à la moitié de la responsivité maximum de la photocathode. Ce seuil correspond typiquement à une valeur de 100 mA/W pour une photocathode AsGa standard.

Pour les longueurs d'onde qui ne sont pas filtrées, la photocathode 11 est transparente ou semi-transparente.

Si l'élément 16 permettant de filtrer les longueurs d'onde qui peuvent détruire la photocathode 11 permet en outre de focaliser le faisceau transmis sur le capteur 14, alors il est possible d'effectuer une observation de l'environnement de jour.

Ainsi, un dispositif selon l'invention permet l'utilisation du capteur 14 en vision jour sans refocalisation de l'objectif 23 et sans risque de dégrader la photocathode. On rappelle que préférentiellement le capteur est du type CMOS et que le détecteur dans son ensemble est du type EBCMOS.

Préférentiellement, l'élément 16 forme un filtre optique apte à filtrer les longueurs d'onde pour lesquelles la responsivité de la photocathode est au mieux nulle et au moins inférieure à un seuil de destruction sous éclairement diurne. Dans le cas d'une photocathode AsGa, cela correspond à un filtrage des longueurs d'onde inférieures à 900 nm et/ou un filtrage des longueurs d'onde supérieures à 530 nm.

L'élément 16 peut être une lame dichroïque. Les longueurs d'ondes transmises peuvent être soit dans la bande visible, soit dans la bande proche IR. Notons que la visualisation en proche IR de la voie jour offre certains avantages parmi lesquels l'augmentation du contraste de la cible sur un fond végétal (albédo de la chlorophylle) et une meilleure transmission atmosphérique.

Les moyens de commutation 17 comportent par exemple un moteur 17 entraînant un arbre 20 relié à l'élément 16.

L'épaisseur 18 de l'élément 16 est telle que le faisceau 24 est focalisé sur le capteur 14 après son passage à travers l'objectif 23 et l'élément 16.

Les moyens 17 sont bien entendu aptes à escamoter l'élément 16 de sorte que si l'on désire retourner à une vision nuit à partir d'une vision jour, on passe de la position de la figure 5B à la position de la figure 5A.

Les figures 6A et 6B représentent schématiquement un deuxième mode de réalisation possible d'un dispositif selon l'invention.

Selon ce mode de réalisation, pour éviter un déséquilibrage mécanique du dispositif, les moyens de commutation sont aptes à placer une lame 21 d'équilibrage au droit du détecteur sur le trajet du faisceau incident lorsque l'élément optique 16 est en position escamotée comme c'est le cas sur la figure 6A. Les éléments 21 et 16 sont placés symétriquement l'un par rapport à l'autre par rapport à l'axe longitudinal du bras 20 couplé au moteur des moyens de commutation 17.

La figure 6B montre que les moyens de commutation 17 sont aptes à escamoter la lame 21 lorsque l'élément 16 est au droit du détecteur 2.

La lame d'équilibrage permet avantageusement d'équilibrer mécaniquement un élément formant un bloc support 22 de l'élément 16 dans le cas où l'élément 16 est de trop fine épaisseur pour une facilité de manipulation et une rigidité mécanique suffisantes. Bien entendu, l'élément 16 et le support 22 peuvent ne former qu'une pièce et être monobloc. Ils ne forment alors qu'un seul élément.

Le bloc 22 est inutile si l'élément 16 est d'épaisseur suffisante.

Préférentiellement, la lame d'équilibrage est également apte à filtrer spectralement le faisceau pour bloquer certaines longueurs d'ondes. La lame d'équilibrage 21 permet bien entendu toujours la focalisation du faisceau incident sur la photocathode 11 en association avec l'objectif 23.

Avantageusement, la lame 21 comporte au moins deux zones de filtrage de longueur d'ondes. Les moyens de commutation sont aptes à placer chaque zone au droit du détecteur en fonction de l'utilisation souhaitée du dispositif. La lame 21 peut ainsi être un filtre passe-haut et/ou passe-bas.

Préférentiellement, le bloc 22 et l'élément 16 peuvent être aptes à fermer l'ouverture optique de la pupille du détecteur. Ils forment donc un diaphragme.

Le bloc 22 et l'élément 16 peuvent comporter au moins deux zones de filtrage de longueur d'ondes. Les moyens de commutation sont aptes à placer chaque zone au droit du détecteur en fonction de l'utilisation souhaitée du dispositif. Pour placer chaque zone de filtrage en face du détecteur, il suffit par exemple de tourner l'arbre 20 d'un angle différent.

La fermeture de l'ouverture et le placement de différents filtres en position jour permettent d'obtenir une bonne profondeur de champ au dispositif.

Par exemple encore, en vision de jour, le bloc 22 et l'élément 16 forment un filtre passe-bande, la bande étant par exemple centrée autour de 500 nm.

On comprend que d'autres filtres optiques que ceux décrits peuvent être placés au droit du capteur en fonction des applications souhaitées. En particulier, des filtres d'épaisseur différente permettent au dispositif d'assurer une focalisation jour (capteur) ou nuit (photocathode) pour différentes distances objets de mise au point.

## Revendications

1. Dispositif optronique d'observation comportant un détecteur (2), le détecteur comportant une photocathode (11) et un capteur (14) agencés pour recevoir un faisceau (24) lumineux incident, le dispositif comportant en outre des moyens de commutation (17) aptes à placer un élément (16, 22) optique au droit dudit détecteur sur le trajet du faisceau incident ou à escamoter ledit élément, le dispositif comportant des moyens aptes à focaliser un rayon incident sur la photocathode (11) lorsque l'élément est en position escamotée, l'élément (16, 22) étant apte, lorsqu'il est placé au droit du détecteur, à focaliser le faisceau sur le capteur (14) et à filtrer spectralement le faisceau pour bloquer tout ou partie des longueurs d'onde pour lesquelles la responsivité de la photocathode (11) est supérieure à un seuil correspondant à un seuil de non-dégradation thermique de la photocathode définissant une zone spectrale pour laquelle la photocathode n'interagit plus ou très peu avec les photons incidents et pour laquelle la responsivité du capteur est suffisante pour fournir un signal vidéo de bonne qualité.

2. Dispositif selon la revendication 1, dans lequel la photocathode (11) est placée en amont du capteur sur le trajet du faisceau et comporte de l'arséniure de gallium (AsGa).

3. Dispositif selon la revendication 1, dans lequel la photocathode (11) est placée en amont du capteur sur le trajet du faisceau et comporte du silicium et un dépôt multi-alcali

4. Dispositif selon l'une des revendications précédentes, dans lequel le capteur (14) est du type semi-conducteur à oxyde de métal complémentaire ou à couplage de charges.

5. Dispositif selon l'une des revendications précédentes, dans lequel les moyens de commutation sont en outre aptes à placer une lame (21) d'équilibrage au droit du détecteur sur le trajet du faisceau incident lorsque l'élément (16, 22) optique est en position escamotée ou à escamoter ladite lame d'équilibrage lorsque l'élément est au droit du détecteur.

6. Dispositif selon la revendication précédente, dans lequel la lame (21) d'équilibrage est apte à filtrer spectralement le faisceau pour bloquer certaines longueurs d'onde.

7. Dispositif selon la revendication précédente, dans lequel l'élément (16, 22) est apte à fermer l'ouverture optique de la pupille du détecteur.

8. Dispositif selon l'une des revendications précédentes, dans lequel l'élément (16, 22) comporte au moins deux zones de filtrage de longueur d'ondes différentes, les moyens de commutation étant aptes à placer chaque zone au droit du détecteur en fonction de l'utilisation du dispositif.

9. Dispositif selon l'une des revendications précédentes, comportant plusieurs lames d'épaisseur différente permettant au dispositif d'assurer une focalisation jour sur le capteur ou nuit sur la photocathode pour différentes distances objets de mise au point.

10. Dispositif selon l'une des revendications 4 à 9, dans lequel le détecteur est du type EBCMOS ou EBCCD, la face de détection du capteur CMOS ou CCD étant la face arrière.

11. Lunette de vision de jour et de nuit adaptée notamment pour être mise en place sur un casque de fantassin ou une arme, **caractérisée en ce qu'**elle comporte un dispositif selon l'une des revendications précédentes.

## Claims

1. Optronic observation device comprising a detector (2), the detector comprising a photocathode (11) and a sensor (14) arranged to receive an incident beam (24), the device also comprising switching means (17) able to position an optical element (16, 22) opposite said detector on the pathway of the incident beam or to retract said element, the device comprising means able to focus an incident ray on the photocathode (11) when the element is in retracted position, the element (16, 22), when positioned opposite the detector, being able to focus the beam on the sensor (14) and to filter the beam spectrally to block all or part of the wavelengths for which the responsiveness of the photocathode (11) is greater than a threshold corresponding to a threshold of thermal non-degradation of the photocathode, defining a spectral zone for which the photocathode no longer or only scarcely interacts with the incident photons and for which the responsiveness of the sensor is sufficient to supply a video signal of good quality.

2. Device as in claim 1, wherein the photocathode (11) is positioned upstream of the sensor on the pathway of the beam and comprises gallium arsenide (AsGa).

3. Device as in claim 1, wherein the photocathode (11) is positioned upstream of the sensor on the pathway of the beam and comprises silicon and a multi-alkali deposit.

4. Device as in any of the preceding claims, wherein the sensor (14) is of Complementary Metal-Oxide Semi-conductor type or of Charge Coupled type.

5. Device as in any of the preceding claims, wherein the switching means are also able to position a balancing plate (21) opposite the detector on the pathway of the incident beam when the optical element (16, 22) is in retracted position, or to retract said balancing plate when the element is opposite the detector.

6. Device as in the preceding claim wherein the balancing plate (21) is able to filter the beam spectrally to block certain wavelengths.

7. Device as in the preceding claim wherein the element (16, 22) is able to close the optical aperture of the detector.

8. Device as in any of the preceding claims, wherein the element (16, 22) comprises at least two zones for filtering different wavelengths, the switching means being able to position each zone opposite the detector in relation to use of the device.

9. Device as in any of the preceding claims comprising several plates of different thickness enabling the device to ensure day focusing on the sensor or night focusing on the photocathode for different focusing distances.

10. Device as in any of claims 4 to 9, wherein the detector is of EBCMOS or EBCCD type, the detection face of the CMOS or CCD sensor being the rear face.

11. Sight for day and night vision adapted in particular for mounting on an infantry helmet or on a weapon, **characterized in that** it comprises a device as in any of the preceding claims.

## Patentansprüche

1. Optoelektronische Beobachtungsvorrichtung, die einen Detektor (2) umfaßt, wobei der Detektor eine Fotokathode (11) und einen Sensor (14) umfaßt, die dafür eingerichtet sind, einen einfallenden Lichtstrahl (24) zu empfangen, wobei die Vorrichtung außerdem Umschaltmittel (17) umfaßt, die dafür eingerichtet sind, vor dem Detektor in der Bahn des einfallenden Strahls ein optisches Element (16, 22) zu plazieren oder dieses Element einzufahren, wobei die Vorrichtung Mittel umfaßt, die dafür geeignet sind, einen einfallenden Strahl auf die Fotokathode (11) zu fokussieren wenn das Element in der eingefahrenen Position ist, wobei das Element (16, 22), wenn es vor dem Detektor plaziert wird, dafür geeignet ist, den Strahl auf den Sensor (14) zu fokussieren und den Strahl spektral zu filtern, um alle oder einen Teil der Wellenlängen zu blockieren, für die die Empfindlichkeit der Fotokathode (11) über einem Schwellwert liegt, der einem Schwellwert für die nicht eintretende thermische Beschädigung der Fotokathode entspricht, der einen spektralen Bereich definiert, in dem die Fotokathode nicht mehr oder sehr wenig mit den einfallenden Photonen wechselwirkt und in der die Empfindlichkeit des Sensors ausreicht, um ein Videosignal guter Qualität zu liefern.

2. Vorrichtung nach Anspruch 1, bei der die Fotokathode (11) vor dem Sensor in der Strahlenbahn plaziert wird und Galliumarsenid (AsGa) umfaßt.

3. Vorrichtung nach Anspruch 1, bei der die Fotokathode (11) vor dem Sensor in der Strahlenbahn plaziert wird und Silizium und eine multialkalische Auftragung umfaßt.

4. Vorrichtung nach einem der vorhergehenden Ansprüche, bei der der Sensor (14) vom CCD- oder CMOS-Halbleitertyp ist.

5. Vorrichtung nach einem der vorhergehenden Ansprüche, bei der die Umschaltmittel außerdem dazu geeignet sind, eine Ausgleichsplatte (21) vor dem Detektor in der Bahn des einfallenden Strahls zu plazieren, wenn das optische Element (16, 22) in der eingefahrenen Position ist, oder die Ausgleichsplatte einzufahren, wenn das Element vor dem Detektor ist.

6. Vorrichtung nach dem vorhergehenden Anspruch, bei der die Ausgleichsplatte (21) dafür geeignet ist, den Strahl spektral zu filtern, um bestimmte Wellenlängen zu blockieren.

7. Vorrichtung nach dem vorhergehenden Anspruch, bei der das Element (16, 22) dafür geeignet ist, die optische Öffnung der Blende des Detektors zu verschließen.

8. Vorrichtung nach einem der vorhergehenden Ansprüche, bei der das Element (16, 22) wenigstens zwei verschiedene Zonen zur Wellenlängenfilterung umfaßt, wobei die Umschaltmittel dafür geeignet sind, in Abhängigkeit von der Anwendung der Vorrichtung jede dieser Zonen vor dem Detektor zu plazieren.

9. Vorrichtung nach einem der vorhergehenden Ansprüche, die mehrere Platten verschiedener Dicke umfaßt, die es der Vorrichtung gestatten, eine Fokussierung bei Tag auf den Sensor oder bei Nacht auf die Fotokathode sicherzustellen und dies für verschiedene Objektentfernungseinstellungen.

10. Vorrichtung nach einem der Ansprüche 4 bis 9, bei der der Detektor vom EBCCD- oder EBCMOS-Typ ist, wobei die Detektionsseite des CCD- oder CMOS-Sensors die Rückseite ist.

11. Tages- und Nachtsichtbrille, die insbesondere dafür eingerichtet ist, auf dem Helm eines Infanteristen oder auf einer Waffe plaziert zu werden, **dadurch gekennzeichnet, daß** sie eine Vorrichtung gemäß einem der vorhergehenden Ansprüche umfaßt.
